Europäisches Patentamt

**European Patent Office**

Office européen des brevets

(19)

(11) Numéro de publication: **0 068 308**
**B1**

(12) # FASCICULE DE BREVET EUROPEEN

(45) Date de publication du fascicule du brevet:
21.08.85

(51) Int. Cl.⁴: **H 01 B 7/04,** H 01 B 7/34,
H 01 B 7/28

(21) Numéro de dépôt: 82105277.6

(22) Date de dépôt: 16.06.82

(54) Câble électromécanique résistant à des températures et pressions élevées, et son procédé de fabrication.

(30) Priorité: 18.06.81 FR 8111992

(43) Date de publication de la demande:
05.01.83 Bulletin 83/1

(45) Mention de la délivrance du brevet:
21.08.85 Bulletin 85/34

(84) Etats contractants désignés:
BE CH DE FR GB IT LI NL SE

(56) Documents cités:
FR - A - 2 236 252
FR - A - 2 246 946
FR - A - 2 391 250
FR - A - 2 484 688
GB - A - 1 006 897
US - A - 3 773 109

(73) Titulaire: **LES CABLES DE LYON Société anonyme dite:,**
**170 quai de Clichy, F-92111 Clichy Cedex (FR)**

(72) Inventeur: **Naudet, Jacques, 76, Avenue de la**
**République, F-92500 Rueil Malmaison (FR)**

(74) Mandataire: **Weinmiller, Jürgen et al, Zeppelinstrasse 63,**
**D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un câble électromécanique résistant à des températures d'au moins 200°C et à des pressions élevées, pouvant atteindre plusieurs centaines de bars, comprenant des conducteurs isolés enrobés d'un matériau de bourrage conducteur remplissant les vides les séparant, du puis entourés d'une couche de matériau textile conducteur et d'une armure formée d'au moins une couche de fils métalliques enroulés en hélice.

De tels câbles, utilisés notamment dans les forages de recherche de pétrole, doivent subir en service des contraintes très sévères dues à la pression exercée par les couches minérales traversées par le câble, ainsi qu'à la température élevée, provenant d'une part de son augmentation naturelle en fonction de la profondeur atteinte, d'autre part de l'échauffement dû au travail de forage.

Il s'avère maintenant nécessaire d'utiliser des câbles résistant à des températures de service supérieures à 200°C et même 220°C, et à des pressions externes de plusieurs centaines de bars.

On connaît maintenant des isolants des conducteurs individuels qui résistent à ces conditions de service, notamment le polyméthylpentène qui a fait l'objet du document FR-A-2 472 823 au nom de la demanderesse, le polyfluorure d'éthylène et de propylène, et le copolymère d'éthylène et de tétrafluoréthylène.

On ne connaissait par contre pas de bourrage satisfaisant dans le cas considéré, c'est-à-dire suffisamment conducteur d'une part pour assurer une répartition régulière des potentiels à l'intérieur du câble, suffisamment stable aux températures élevées d'autre part, et enfin susceptible d'être mis en œuvre de façon satisfaisante.

Par ailleurs on demande à de tels bourrages d'être élastiques et de s'opposer à la déformation des isolants sous l'effet des contraintes mécaniques et thermiques.

En particulier, le polyéthylène tétrasulfuré, chargé de noir de carbone pour assurer une répartition régulière des potentiels autour des différents conducteurs en évacuant les charges statiques susceptibles de perturber les mesures et en jouant un rôle de blindage, ne peut résister à des températures supérieures à 150°C.

Il a déjà été proposé dans le document US-A-3 773 109 un câble électromécanique pour systèmes de forage, contenant de l'axe vers le pourtour une ligne coaxiale de transmission, une couche d'isolant électrique, des conducteurs électriques isolés entourés par un matériau de bourrage semiconducteur, une couche de ruban semiconducteur enroulé en spirale et une armure formée de couches de fils métalliques enroulés en hélice. Le matériau de bourrage peut être de tout type connu, par exemple à base de caoutchouc polychloroprène.

Il a également été proposé dans le document FR-A-2 391 250 un caoutchouc silicone électriquement conducteur, notamment pour électrode allongée, contenant jusqu'à 25% du poids total du matériau produit, de noir de fumée conducteur, et 25 à 200%, par rapport au poids de la résine silicone, d'un additif tel que du dioxyde de titane. On pouvait utiliser des caoutchoucs silicones et des noirs de fumée de qualités très diverses. Le caoutchouc silicone ainsi chargé devient virtuellement non-conducteur au-dessus de 150°C.

Même en utilisant dans un câble de structure analogue à celle du document US-A-3 773 109 un caoutchouc silicone et du noir de fumée tels que ceux du document FR-A-2 391 250, on n'obtient pas un câble présentant une répartition régulière des potentiels électriques, du fait de la difficulté d'incorporer dans une silicone une quantité suffisante de noir de carbone de façon homogène.

La présente invention a pour but de procurer un câble electromécanique résistant à des températures d'au moins 200°C et à des pressions élevées, comprenant des conducteurs isolés eurobés d'un matériau de bourrage conducteur remplissant les vides les séparant, puis entourés d'une couche de matériau textile conducteur et d'une armure formée d'au moins une couche de fils métalliques enroulés en hélice.

Le câble selon invention est caractérisé en ce que son matériau de bourrage contient une diorganopolysiloxane et une charge semiconductrice de noir de carbone formé de particules de surface spécifique au moins égale à 150 m²/g, en proportions relatives de 30 à 50 parties en poids de noir de carbone pour 100 parties de diorganopolysiloxane.

De préférence, les conducteurs sont isolés à l'aide de polyméthylpentène.

L'invention s'étend en outre à un procédé de fabrication d'un câble tel que défini ci-dessus, dans lequel on introduit le matériau de bourrage entre les conducteurs isolés au moment de leur assemblage par passage de l'âme dans une filière, puis l'on entoure l'ensemble des conducteurs assemblés d'un ruban textile conducteur, caractérisé en ce que l'on prépare un mélange de silicone liquide, de noir de carbone et d'un agent de réticulation de la silicone liquide, de viscosité inférieure à 10 000 Pascal-secondes à 20°C, en ce que l'on injecte ce mélange dans la filière d'assemblage des conducteurs, et en ce que l'on le laisse se réticuler après mise en place du ruban textile conducteur.

De préférence, l'on assure la réticulation du matériau de bourrage en chauffant l'âme du câble entourée du ruban textile à l'étuve au-dessus de 100°C pendant plusieurs jours.

Il est décrit ci-après à titre d'exemple et en référence aux figures du dessin annexé, un câble selon l'invention et le procédé de fabrication de son âme.

La figure 1 représente le câble en section droite.

La figure 2 représente un appareillage de fabrication de son âme.

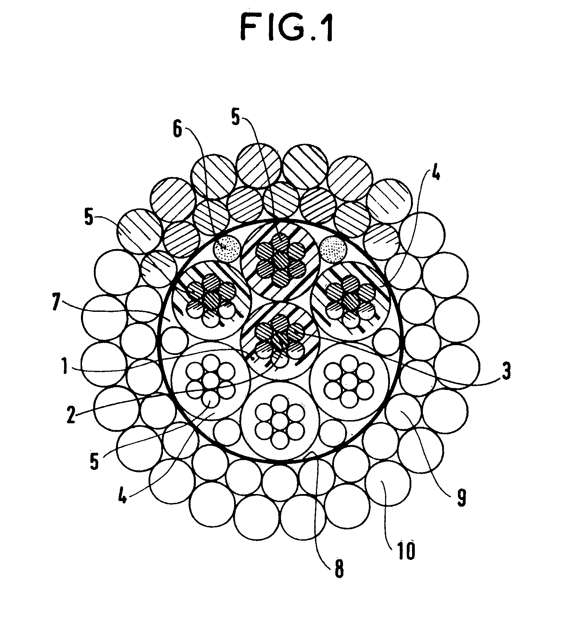

Dans la figure 1, le câble comporte un toron central 1 formé d'un crin isolant 2, par exemple en polyester, entouré de six fils de cuivre 3 torsadés en hélice, le tout étant isolé à l'aide de polyméthylpentène ou d'un autre isolant résistant à haute température. Le toron central est entouré de six autres torons tels que 4 formés de sept fils torsadés 5 isolés à l'aide du même isolant que le toron central. Le toron central et les torons périphériques sont enduits d'un vernis semi-conducteur à base de carbone amorphe ou de graphite pour permettre l'écoulement des charges électriques statiques dont l'accumulation pourrait provoquer des décharges perturbatrices. Des cordons de bourrage en matériau textile enduit d'un vernis semi-conducteur, tels que 6, sont placés dans les interstices externes entre deux torons périphériques.

Tous ces éléments sont noyés dans un matériau de bourrage 7 contenant 100 parties en poids des diorganopolysiloxane semi-conductrice et 30 à 50 parties de noir de carbone formé de particules de 24 microns de diamètre, de surface spécifique 179 m²/g. Ce matériau présente une dureté Shore A minimale de 40, une résistance à la rupture supérieure à 4,5 N/mm² et une résistivité électrique au plus égale à 500 ohms-cm. Celui-ci est entouré d'un ruban textile 8 à base de polyester ou de polyamide aromatique, ou de fibres de verre. Ce ruban est rendu conducteur par imprégnation d'un enduit conducteur. L'ensemble est recouvert d'une double armure formée de deux couches de fils d'acier 9, 10 à haute résistance, enroulés en hélice à pas inverse.

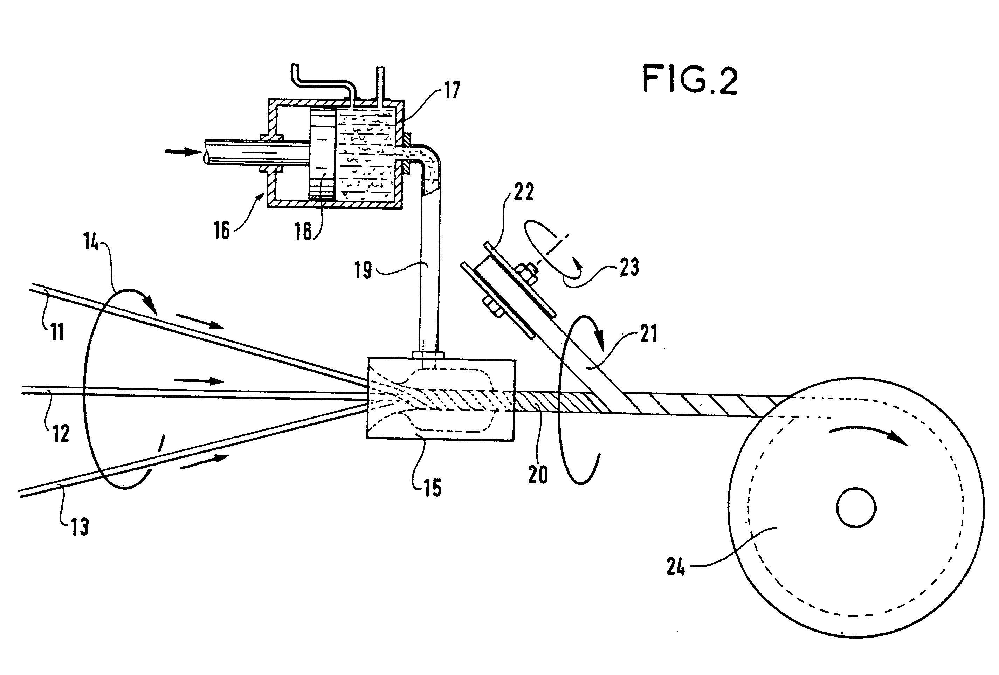

Dans la figure 2, les torons 11, 12, 13 (il n'en a été représenté que trois pour plus de clarté), qui avancent tout en tournant comme représenté par la flèche 14, pénétrent dans une filière 15. Celle-ci est relié à un dispositif d'injection 16 de silicone liquide chargée de noir de carbone et additionnée d'un catalyeur de réticulation, par exemple de peroxyde de dicumyle ou de benzoyle. Ce dispositif est représenté schématiquement par une enceinte 17 et un piston 18, refoulant le mélange liquide sous une pression de quelques bars dans le conduit 19 vers la filière.

A la sortie de la filière, l'âme 20 formée des torons torsadés enrobés de silicone liquide, est recouverte d'un ruban textile 21 en polyester, fibre de verre ou polyamide aromatique, qui est mis en place à l'aide d'une bobine 22 tournant autour de l'âme (flèche 23) pendant la progression de celle-ci sous l'effet de la bobine de réception 24.

Lorsque la bobine de réception est chargée par l'âme du câble, elle est portée dans une étuve à une température supérieure à 100°C. Elle y est maintenue deux à trois jours pour permettre la réticulation de la silicone semi-conductrice sous l'effet du catalyseur.

Après réticulation, le matériau de bourrage présente les caractéristiques mécaniques et électriques indiquées ci-dessus.

L'âme du câble est alors recouverte de la manière habituelle d'une double armure de fils d'acier enroulés en hélice à pas inverses. Le câble est alors prêt à l'utilisation.

Les cordons de bourrage entre les torons extérieurs peuvent éventuellement être omis. Le nombre de couches de fil d'acier de l'armature peut être adapté à la résistance mécanique désirée pour le câble. Le nombre de conducteurs de chaque toron peut également être modifié.

**Revendications**

1. Câble électromécanique résistant à des températures d'au moins 200°C et à des pressions élevées, comprenant des conducteurs isolés (3, 5) enrobés d'un matériau de bourrage conducteur (7) remplissant les vides les séparant, puis entourés d'une couche de matériau textile conducteur (8) et d'une armure formée d'au moins une couche de fils métalliques (9, 10) enroulés en hélice, caractérisé en ce que le matériau de bourrage contient une diorganopolysiloxane et une charge semi-conductrice de noir de carbone formé de particules de surface spécifique au moins égale à 150 m²/g, en proportions relatives de 30 à 50 parties en poids de noir de carbone pour 100 parties de diorganopolysiloxane.

2. Câble selon la revendication 1, caractérisé en ce que les conducteurs sont isolés à l'aide de polyméthylpentène.

3. Procédé de fabrication d'un câble selon les revendications 1 ou 2, dans lequel on introduit le matériau de bourrage entre les conducteurs isolés au moment de leur assemblage par passage de l'âme dans une filière (15), puis l'on entoure l'ensemble des conducteurs assemblés d'un ruban textile conducteur (21), caractérisé en ce que l'on prépare un mélange de silicone liquide, de noir de carbone et d'un agent de réticulation de la silicone liquide, de viscosité inférieure à 10 000 Pascal-secondes à 20°C, en ce que l'on injecte (16) ce mélange dans la filière d'assemblage des conducteurs, et en ce que l'on le laisse se réticuler après mise en place du ruban textile conducteur.

4. Procédé selon revendication 3, caractérisé en ce que l'on chauffe l'âme du câble entourée du ruban textile à l'étuve au-dessus de 100°C pendant plusieurs jours.

**Patentansprüche**

1. Elektromechanisches Kabel, das Temperaturen von mindestens 200°C und hohe Drücke aushält, mit isolierten Leitern (3, 5), die von einem leitenden Füllmaterial (7), welches die sie trennenden Zwischenräume ausfüllt, und dann von einer Schicht aus leitendem Textilmaterial (8) und einer Bewehrung bestehend aus mindestens einer Schicht von spiralförmig gewickelten Metalldrähten (9, 10) umgeben sind, dadurch gekennzeichnet, daß das Füllmaterial ein Diorganopolysiloxan und einen halbleitenden Zusatz von Ruß, gebildet aus Partikeln einer spezifischen Oberfläche, die mindestens gleich 150 m²/g ist, enthält, mit relativen Anteilen von 30 bis 50 Gewichtsteilen Ruß für 100 Gewichtsteile Diorganopolysiloxan.

2. Kabel nach Anspruch 1, dadurch gekennzeichnet, daß die Leiter mit Hilfe von Polymethylpenten isoliert sind.

3. Verfahren zur Herstellung eines Kabels nach den Ansprüchen 1 oder 2, bei dem man das Füllmaterial zwischen die isolierten Leiter zum Zeitpunkt ihres Zusammenbaus durch Einführen der Seele in ein Zieheisen (15) einbringt und dann die Gesamtheit der zusammengebauten Leiter mit einem leitenden Textilband (21) umgibt, dadurch gekennzeichnet, daß man eine Mischung aus flüssigem Silikon, Ruß und einem Vernetzungsagens für das flüssige Silikon vorbereitet, mit einer Viskosität von weniger als 10 000 Pascal-Sekunden bei 20°C, daß man diese Mischung in das Zieheisen zum Zusammenbau der Leiter einspritzt (16) und daß man sie sich nach dem Aufbringen des leitenden Textilbandes vernetzen läßt.

4. Verfahren nach Anspruch 3, dadurch gekennzeichnet, daß man die Seele des Kabels, die von dem Textilband umgeben ist, während mehrerer Tage im Trockenofen auf mehr als 100°C erhitzt.

**Claims**

1. An electromechanical cable withstanding temperatures of at least 200°C and high pressures and comprising insulated conductors (3, 5) covered with a conductive filler material (7) which fills the voids between the conductors, then surrounded by a layer of conductive textile material (8) and by an armour constituted of at least one layer of helically wound metal wires (9, 10), characterized in that the filler material comprises a diorganopolysiloxane and a semiconducting charge of carbon black in the form of particles having a specific surface that is at least equal to 150 m²/g, in relative proportions of 30 to 50 parts by weight of carbon black per 100 parts by weight of diorganopolysiloxane.

2. A cable according to claim 1, characterized in that the conductors are insulated with polymethylpentane.

3. A method of manufacturing a cable according to claims 1 or 2, in which the filler material is introduced between the insulated conductors at the moment of their assembly by passage of the core through a die (15), then the unit of assembled conductors is surrounded by a conductive textile tape (21), charaterized in that a mixture of liquid silicone, carbon black and a reticulation agent for the liquid silicone is prepared, the viscosity of which is lower than 10 000 Pascal-seconds at 20°C, that this mixture is injected (16) into the assembly die of the conductors, and that it is allowed to reticulate after installation of the conductive textile tape.

4. A method according to claim 3, characterized in that the core of the cable surrounded by the textile tape is heated in an oven to a temperatur higher than 100°C and for a period of several days.

# FIG.1

FIG.2